# EUROPEAN PATENT APPLICATION

(11) **EP 2 853 802 A1**
(43) Date of publication of application: **01.04.2015**
(21) Application number: 13186052.0
(22) Date of filing: 26.09.2013
(51) Int. Cl.: F17D 1/17, C10M 169/00, C10M 169/04, H01B 3/20

(54) **Flow improver aid composition, process for its preparation and methods of using it**

(71) Applicant: M-I Finland Oy, 06101 Porvoo (FI)
(72) Inventor: Karbasi, Amir Kiumars, 02140 Espoo (FI); Andem, Mikael Taavetti Atabop, 00520 Helsinki (FI); Rockas, Leif Anders Mikael, 06150 Porvoo (FI); Ruutu, Kirsti Sinikka, 06100 Porvoo (FI); Ericsson, Riitta Hannele, 06150 Porvoo (FI); Eklund, Mirja Helena, 06650 Hamari (FI)
(74) Representative: Berggren Oy Ab

(57) **Abstract**

This disclosure relates to a flow improver aid composition comprising vegetable oil, pour point modifier and stabilizing agent(s), and to a process for preparation of said composition. The disclosure also relates to a method of improving the flow of a hydrocarbon fluid composition in a pipeline and to removing deposits inside a pipeline. The composition is suitable for use also in subsea conditions.

## Description

### Field

The present disclosure relates to a flow improving composition and a process for its preparation. The present disclosure also relates to a method of improving the flow of a hydrocarbon fluid composition in a pipeline and a method for removing deposits inside a pipeline.

### Background

Approximately 60% of the world's oil production derives from offshore operations, also in very deep waters up to at least 8000 meters. The cost of subsea pipelines is high and thus they must be carefully managed and serviced to extend their workable lives.

Feeding a hydrocarbon fluid through a pipeline causes friction originating from the motion of the fluid stream generating turbulence inside the pipeline. This friction introduces a pressure drop which increases with the length of the pipeline. This friction loss is also called drag, and it is a major reason for increased energy and equipment costs for transportation of the fluid.

Drag reducing agents are widely used in transportation of hydrocarbons in petroleum pipelines. The drag reducing agents and other additives are typically introduced to oil well head and/or the hydrocarbon containing pipeline via so called service-in pipeline. Suitable drag reducing agents have been e.g. high molecular weight non-crystalline olefin polymers.

Typical drag reducing compositions have high viscosities and therefore require high delivery line pressures. When the conduit is extended in length and decreased in diameter the pressure requirement easily becomes intolerable. In addition the high molecular polymers have a tendency of agglomeration. The problem has been tried to suppress by stabilization and coating the polymer particles with e.g. an anti-agglomerating agent. However, these technologies have encountered a drawback of insufficient viscosity of the composition, limited solubility in the hydrocarbon fluid and separation of the components. In addition the deposits of additives in the service-in pipeline may further increase the pressure drop in serve-in pipelines and cause problems when other fluid is needed via the conduit.

In general, gel and suspension drag reducing compositions have not been used at subsea locations because economical subsea delivery would require passage through long conduits having small diameters at unstable ambient, and the probability of plugging becomes too pronounced. Typically the conduits are located inside an umbilical service-in pipeline.

Latex type of drag reducing agents have been used at subsea applications in transport through long conduits having small diameters because they have relatively low viscosity and contain relatively small particles of the drag reducing polymer. The drawback in the use of these types of drag reducing agents is the formation of natural gas hydrates plugging the conduit when they come into contact with natural gas under conditions of low temperature and/or high pressure.

WO2008/014190 discloses a method for transporting a drag reducing agent through an injection conduit of a subsea umbilical line, and introducing said agent into oil or natural gas originating from the subsea oil well. This latex type drag reducing agent comprises a hydrate inhibitor as a liquid continuous phase in addition to the drag reducing polymeric agent which forms the dispersed phase. The amount of said hydrate inhibitor is such that it prevents the formation of gas hydrate.

The above technical solutions in which a single composition comprising the drag reducing agent is introduced into a subsea location still have the disadvantage that over time phase separation, segregation and agglomeration tend to occur and the compositions are not optimized for introduction to the hydro-carbon fluid, the drag of which is to be reduced.

Service-in pipelines may become clogged or narrowed with flow-reducing deposits, particularly where the pipelines carry a number of different products in multiphase flow. Clogging can be relieved with mechanical cleaning by "pigging". A sufficient pressure of compressed gas is required for driving a mechanical "pig" through a possibly narrowed pipeline, particularly lengthy subsea service-in pipeline. E.g. US 8,381,578 discloses an apparatus ("a pig") and methods for subsea pipeline servicing.

Thus there is a need for methods and compositions for reducing back-pressure in lengthy pipelines having small diameter and also need for removing deposits from such pipelines which are not suited for mechanical cleaning.

Also, the composition should have sufficiently high concentration and be easy to prepare and handle. Moreover, the raw materials should be economical and safe, and easily available.

### Objects and Summary

The present disclosure provides a fluid composition for improving flow of the viscous hydrocarbon fluid, for reducing back pressure in pipelines and for enhancing feeding of viscous hydrocarbon fluids and reducing the deposits in said pipeline.

First aspect is a flow improver aid composition that comprises
(a) 75 to 98.9 wt-% vegetable oil; and
(b) 1 to 20 wt-% pour point modifier; and
(c) 0.1 to 5% wt-% stabilizing agent(s).

Further aspects are processes for preparation of a composition as described herein, where the process comprises the steps of:
(a) providing vegetable oil or a stabilized vegetable oil; and
(b) adding pour point modifier to step (a); and
(c) adding base to step (b) provided that the oil of step (a) is not stabilized; and
(d) optionally providing an unsaturated fatty acid to step (c); and
(e) mixing said constituents.

A further aspect is a product obtainable by using the processes described herein.

Further aspects are methods of improving the flow of a fluid composition in a pipeline and methods for removing deposits inside a pipeline, where the methods comprise feeding the composition described herein into the pipeline.

A further aspect is the use of the composition as described herein for improving the flow in subsea umbilical pipeline.

### Short description of the drawings

**Figure 1** shows a flow improver aid composition and a drag reducing composition at 4°C alternately to sight gauge. Gauge on the left shows situation where the viscosity difference between said compositions in too small, gauge on the middle shows situation where layers can be seen and in the gauge on the right the drag reducing agent composition is elevated to the top of the gauge.

**Figure 2** shows a sight gauge containing immiscible layers of the flow improver according to the present disclosure and a drag reducing composition. Recipes of the compositions 5 and 6 are shown in Table 1.

### Definitions

Viscosities (centipoise, cP) discussed in this disclosure are measured at 4°C by use of Brookfield viscometer according to ASTM D1824, 20 rpm standard. Brookfield viscosity determines the internal fluid-friction of a fluid composition. Viscosity of commercially available pour point depressant under trade name Viscoplex is given as kinematic viscosity (m²/s).

Density (g/l, g/cm³, kg/m³) varies with temperature and pressure. In this disclosure the densities have been measured at 4°C by weighting the sample of specific volume and calculating the result by dividing the mass by volume of the sample.

Pour point of a fluid composition is the temperature at which a hydrocarbon fraction (e.g. base oil) will begin to flow. In this disclosure the pour point of the composition is measured by visually estimating whether the composition is flowing in certain temperature. The pour point of pour point and viscosity modifier (Viscoplex^{®}) has been determined according to ASTM D97.

The phrase "Pour point modifier" used herein is used synonymously with phrases "pour point depressant and viscosity index improver" and "Pour point (Depressant) and Cold Flow (Improver) Modifier". Pour point depressant reduces the pour point and improves the cold flow properties of a composition (such as the flow improver aid composition as described here or e.g. a drag reducing composition), particularly the base oil component of the composition. Commercial pour point modifier compositions typically contain an active agent, a carrier and optionally one or more additives such as stabilizing agent(s), dispersing and wetting agents.

Alpha olefin polymers are polymers of alkenes having a double bond between carbons at position 1 and 2. Polymers can be branched or straight strain, heteropolymers or copolymers. A copolymer is a polymer which contains more than one type of repeat unit.

In this connection the term "subsea" is meant activities such as exploration, production and development of oil and gas fields in underwater locations. Underwater oil field facilities are generally referred to using a subsea prefix, such as subsea well or subsea field.

The terms "umbilical" pipeline (cable or line) means a pipeline with multiple conduits which typically supplies required consumables to an oil field (so called in-service pipeline). Subsea oil wells deploy umbilical pipelines to the seabed or ocean floor.

The term "immiscible" means that both fluids are found in pure phases inside the service-in (injection) pipeline. There is to some extent mixing of the two phases at the boundary or interfacial regions, but essentially the two phases remain separate.

### Detailed description

The inventors have found that the flow of a viscous hydrocarbon fluid in a pipeline can be improved, the back pressure reduced and the deposits reduced or removed without need to modify the fluid composition nor using mechanical pipe cleaning apparatus ("pigs", "pigging devices"). Mechanical apparatuses are not suitable for use in pipelines with small diameter. Particularly in sub-sea conditions removal of the apparatuses from the pipeline would require complex system. The effect of reducing back pressure in a pipeline can be achieved by using a fluid flow improved composition that is fed to the pipeline.

The present disclosure is thus directed to a flow improver aid composition comprising
(a) 75 to 98 wt-% vegetable oil; and
(b) 1 to 20 wt-% pour point modifier; and
(c) 1 to 5 wt-% stabilizing agent(s),
wherein the percentages are calculated on the combined weight of constituents.

The inventors have found that particular viscosity ranges of the flow improver aid composition provide good flow properties and do not increase the back-pressure. In embodiments of the present disclosure, the composition has viscosity of 100 to 1000 cP, more specifically 200 to 600 cP, more specifically 250 to 350 cP, and more specifically about 300 cP defined at a temperature of 4°C. Compositions having such viscosity are suitable for cleaning pipelines.

If the oil well head is below the sea level the additives may be fed from storage tanks residing on a production platform above the sea level. At a subsea location the ambient temperature of the injection pipeline varies considerably along the pipeline. This will set demanding requirements for the stability of the composition to be delivered. Depending on the conditions and location the service-in pipeline, the pour point of the composition is below ± 0°C, more specifically below -10°C, more specifically below -18°C, and more specifically below -25°C. Pour points below -10°C, overcomes the viscosity increase due to low ambient temperature and temperature variation during flow through a long pipeline and provides flexibility to use and handle the composition in various conditions. The composition in fluid state allows introducing it to pipelines in varying ambient temperatures. Solidified or aggregating composition is not usable as a flow improver aid composition and cannot be introduced to injection pipelines.

The flow improver aid composition according to the present disclosure is clear or slightly turbid fluid (not dispersion) in temperatures above -10°C, more specifically in temperatures above -20°C and more specifically in even lower temperatures.

The density of the composition is from 0.85 g/l to 0.99 g/l, more specifically from 0.87 g/l to 0.95 g/l, and more specifically from 0.89 g/l to 0.93 g/l, defined at 4°C.

Vegetable oil used as a carrier in the composition is environmentally friendly, user safe and easily available inert carrier for the active compound. It is also not harmful to the hydrocarbon recovered from the oil well. Pour point of the oil is +5°C or lower; more specifically below ±0°C and the oil is in liquid form in ambient temperature of +5°C or any higher temperature. Vegetable oil can be selected from Castor oil, Colza oil, Corn oil, Cottonseed oil, Hemp oil, Mustard oil, Palm oil, Peanut oil, Radish oil, Rapeseed oil , including Canola oil, Ramtil oil, Rice bran oil, Safflower oil, Salicornia oil, Soybean oil, Sunflower oil, Tigernut oil , Tung oil, , Olive oil, Safflower oil, Sesame oil, Soybean oil, Sunflower oil, Nut oils, Citrus oils, Oils from melon and gourd seeds such as pumpkin seed oil , Flaxseed oil / linseed oil, Hemp oil. Vegetable oil is more particularly selected from rapeseed oil, soybean oil, corn oil, sunflower and linseed oil. Vegetable oil is safe to use and has both high flash point and boiling point.

In the composition described here the pour point modifier comprises acrylic polymer, more specifically an oil solution of acrylic polymer. Acrylic polymers are versatile and suitable for use in various applications. Several types of polymers are also commercially available. In addition acrylic polymers (oil solutions of acrylic polymer) are immiscible with vegetable oils and compatible with olefin polymers in drag reducing compositions. Acrylic polymer is selected from the non-restricting list of polyacrylates polymethacrylates, polyalkylacrylate, polyalkylmethacrylate, polyacrylonitrile, polypropylene, polyethylene and polytetrahydrofuran. Suitable pour point modifiers are commercially available under e.g. trade names Viscoplex^{®} (Evonik/RohMax Oil Additives). Pour point modifier can also contain up to 3 wt-%, more specifically up to 2 wt-%, more specifically up to 1 wt-% and more specifically up to 0.5 wt-% (calculated on the weight of the pour point modifier) additives typically used in the field of drag reduction. The amount of active agent in said composition is 30 to 80 wt-%, and more specifically 40 to 70 wt-% calculated from the weight of the pour point modifier.

A particular stabilizing composition is a fatty acid salt; most particular being sodium stearate.

The flow improver aid composition according to the present disclosure can be used to improve the flow of other fluid composition, such as a drag reducing agent composition. In such case the properties of the flow improver aid composition are adapted to the properties of said other fluid composition and naturally to the requirements set by the pipeline characteristics and the desired capacity etc. Sequential or alternating feed of the composition as will be described here can remarkably improve the flow of other viscous hydrocarbon in a pipeline without need to modify properties of said other composition. This is a remarkable improvement to the situations requiring modifications of e.g. drag reducing agent composition, which typically are not suitable for use in lengthy and narrow pipelines used sub-sea location.

In addition to the above described flow improver aid composition, the present disclosure also relates to process for the preparation of a flow improver aid composition. According to embodiments disclosed herein, the process comprises the steps of:
(a) providing vegetable oil or a stabilized vegetable oil; and
(b) adding pour point modifier to step (a); and
(c) adding base to step (b) provided that the oil of step (a) is not stabilized; and
(d) optionally providing an unsaturated fatty acid to step (c); and
(e) mixing said constituents.

Discussion on suitable amounts of constituents applies also to the amounts to be used in the process for the preparation.

The alternatives of the process can be defined as follows
(a) adding base and optionally unsaturated fatty acid to vegetable oil to form a mixture; and
(b) adding pour point modifier to said mixture; and
(c) mixing said constituents;
or
(a) adding the pour point modifier to vegetable oil to form a mixture; and
(b) adding base of alkali or earth alkali metal and optionally unsaturated fatty acid; and
(c) mixing said constituents;
or
(a) adding pour point modifier to vegetable oil; and
(b) adding fatty acid salt to said mixture; and
(c) mixing said constituents.

Base and optionally fatty acid are used to stabilize the composition by saponifying. Stabilization is especially important when the composition is used in pipelines where back pressure and long distances increases separation of constituents of the compositions. Stabilization also reduces tendency of separation during storage and affects to viscosity of the resulting product. It is possible to further add fine grinded alpha olefin polymer dispersion to the composition for further stabilization; the amount should preferably not exceed 1 wt-%, wherein the percentage is calculated on the combined weight of constituents of the flow improved aid composition.

In said processes the active ingredient, acrylic polymer, is provided with an inert carrier, vegetable oil. The mixture is then stabilized by a fatty acid salt of an alkali or earth alkali metal. Fatty acid salt can be added to the reaction and mixed. Preferably the unsaturated fatty acid is reacted with a base *in situ,* thus forming a mixture of the fat or fatty oil and the stabilising agent. Examples of unsaturated fatty acids are myristoleic acid, palmitoleic acid, sapienic acid, oleic acid, elaidic acid, vaccenic acid, linoleic acid, linoelaidic acid, alpha-linoleic acid, arachidonic acid, combinations thereof, and so on.

The pour point modifier, which may be an oil solution of an acrylic polymer, can be a commercially available product and contain small amounts (up to 2.5 wt-%, and more particularly up to 1.5 wt-% calculated from the pour point modifier composition) of additives that are suitable for use with hydrocarbon flow. Typical additives are stabilizing agents and anti-agglomeration agents. It is evident to a skilled man that stabilization of the pour point modifier may reduce the need of stabilization of the resulting flow improver aid composition.

Examples of fats which may be used include lauric acid-myristic acid fats like coconut fat, palmitic acid fats like palm fat and stearic acid fats like cocoa butter, and combinations thereof. However, the fats only melt at temperatures between 24 and 47°C, so, for dispersion, injection and distribution into the hydrocarbon fluid, they have to be heated. Therefore, the fatty oils provide benefits over the fats. Typical fatty oils are the palmitic acid oils such as palm oil the oleic acid-linoleic acid oils such as olive oil; the linolenic acid oils such as linseed oil, perilla oil and hemp oil; and the eruca acid oils such as rapeseed oil and mustard oil; and combinations thereof. Preferred oils are those based on or containing essential amounts of lauric acid, palmitic acid, stearic acid, oleic acid, linoleic acid and/or myristic acid. Such oils are caybean oil, sun flower oil, lineseed oil, perilla oil, hemp oil, rapeseed oil and mustard oil, and the most preferable are lineseed oil and rapeseed oil. Also other oils such as tall oil, based on fatty acids and resin acids such as abietic acid, can be selected.

A fatty acid may be added to the reaction mixture, but stabilizing effect will also be achieved by reaction between the base and the vegetable oil. Reaction is however much slower. Most preferred are alkali metal and/or alkaline earth metal salts of fatty acids having from 12 to 22 carbon atoms. Example of very useful stabilizing agent is sodium stearate.

The base used in the processes of the present disclosure may be a hydroxide of alkali metal or alkali ne earth metal, such as NaOH, KOH or CaOH₂.

A flow improver aid composition obtainable using the processes as described herein and the use of the composition as described herein or obtainable by the processes as described herein for drag reduction in subsea oil production are also within the scope of this disclosure.

The present disclosure also covers a method of improving the flow of fluid composition in a pipeline. Improved flow is a result of decreased back pressure. According to the present disclosure, the method comprises feeding the composition as described herein into said pipeline. The method can be applied using conventional feeding equipment for the flow improver aid composition according to the present disclosure and the other fluid composition to be fed into the oil well head. Typically it is a drag reducing composition.

The use of the method of this disclosure provides more flexibility to flow properties additives, particularly drag reducing agents and compositions. This method can be adapted to the properties of particular additive and the requirements by the service-in pipeline. It would be most difficult to modify e.g. traditional drag reducing components to be suitable for use in subsea umbilical pipelines. This reduces the need of modification of the additive.

The pipeline may be an umbilical service-in subsea pipeline. The length of the pipeline depends on the location of the facility. A long pipeline provides the most benefits. The length of the service-in pipeline may range from 1 to 20000 m, more specifically from 1000 to 10000 m, and more specifically from 1500 to 3000 m. Typically at subsea applications - in addition to lengthy lines - the individual conduits tend to be fairly narrow to allow flexibility. The present fluid improver aid composition and the method of using it are especially preferable when used in conduits wherein the diameter of a single conduit in said service-in pipeline is from 5 to 50 mm, more specifically from 10 to 35 mm, and more specifically from 16 to 24 mm.

The composition according to the present disclosure is suitably used at ambient temperature of -35 to 60°C, more specifically from -1 to 30°C, and more specifically from 1 to 20°C. It is, however, to be noted that in subsea oil production the temperature at production platform may vary between -40 to 35°C, whereas subsea temperatures are typically between 0°C and 15°C.

The flow improver aid composition may be fed in sequences to form a plug flow, with another composition being immiscible to said flow improver aid composition. The other fluid may comprise a drag reducing agent or composition. The compositions can be found as pure separate phases in the conduit, although some mixing of the two phases at the boundary or interfacial regions may occur.

The densities of the two different fluid compositions should be quite close to each other. The difference in densities of the fluid compositions is sufficiently small to avoid separation due to gravitational force during the transportation of the fluid compositions via the service-in pipeline.

The density of the flow improver aid composition of the present disclosure is to be adapted to be less than the density of the other fluid composition. The density difference between the two fluid compositions is less than 0.1 g/l, more specifically less than 0.07 g/l, and more specifically less than 0.05 g/l, wherein the densities are defined at a temperature of 4°C.

The viscosity of the flow improver aid composition is also to be adapted to the viscosity of the other fluid composition, where the viscosity of the flow improver aid composition is lower than the viscosity of the other fluid. The selection of the viscosities is to be made with the provision that the viscosity difference between the two fluid compositions is greater than 100 cP to reduce the interfacial mixing, more specifically greater than 150 cP, more specifically greater than 200 cP, units, wherein said viscosities are defined at a temperature of 4°C. The viscosity of the other fluid composition (such as a drag reducing agent composition) needs to be high enough to slow down the phase separation but it should not be too high to increase the pressure drop in the line. The viscosity of the fluid composition as described herein should not be too low because the semisolid polymer particles may drop through the liquid.

Suitable physical parameters for the flow improver aid composition according to the present disclosure and for another, more viscous fluid, (for example drag reducing agent composition) are shown in the experimental section. The viscosity of the other hydrocarbon flow is 400 to 3000 cP, more specifically 600 to 2000 cP, and more specifically 1000 to 1500 cP; and density 0.85 to 0.99 g/l, more specifically from 0.87 g/l to 0.95 g/l, more specifically from 0.89 g/cm³ to 0.93 g/cm³, defined at the temperature of 4 °C.

The above methods are particularly useful when the pipeline is a subsea umbilical service-in pipeline. The benefits discussed earlier apply also to this method.

Embodiments disclosed herein are also directed to the use of the flow improver aid composition as described herein or obtainable by the processes described herein for improving the flow in subsea umbilical pipeline.

The plug flow is to be formed in a way that it comprises a volume ratio of the fluid composition from 0.01 to 5 of the fluid improver aid composition according to the present description, to the other viscous hydrocarbon fluid composition (e.g. drag reducing agent composition). More specifically, the ratio is from 0.1 to 1, and more specifically from 0.15 to 0.50. The aim is to provide as high concentration of the other fluid, e.g. a drag reducing agent composition into the hydrocarbon fluid as possible without sacrificing the operational safety. The role of the flow improver aid composition according to this description is to enable removal of the possible remains, especially polymeric remains of the fluid comprising the drag reducing agent. This flow improver aid composition (so called "pigging fluid") is able to carry the possible precipitates or agglomerates from the pipeline surface to the point of use thus enhancing the flow of the other fluid and minimising the plugging tendency inside the injection pipeline.

In methods of the present disclosure, the flow rate of the formed plug flow stream can be from 0.01 to 800 l/h, more specifically from 20 to 150 l/h. This total amount of chemicals used together with e.g. the pipeline diameter, length and desired pressure and the pulsing sequence i.e. valve timing and mass flow through the valve, influence the plug flow segments formed of the two compositions inside the injection pipeline. In methods of the present disclosure the length of the segments of the composition comprising the drag reducing agent and the composition excluding the drag reducing agent vary, for example but not necessarily from 1 to 200 m and from 1 to 100 m, respectively, inside the pipeline. More specifically the segments vary from 1 to 50 m and from 1 to 20 m, respectively, and more specifically from 0.5 to 10m and from 0.1 to 5 m, respectively.

The present disclosure also provides a method for removing deposits inside a pipeline comprising feeding the composition as described herein to the pipeline. Service-in pipelines are typically used for several years. During time the flow rate may be reduced due to deposits and agglomerating constituents. Sometimes even clogging of a conduit may occur. This compromises the economy of the process. It may also be desirable to change the quality or type of the composition to be fed via singe conduit. In such case it is beneficial to remove any residues of the first composition before feeding a new composition. This method of using a flow improved aid composition according to the present description can be applied easily using the conventional equipment.

The advantages in using the methods of the present disclosure is in that the pipeline remains clean, the amount of polymer particles or aggregates on the wall is neglectable. There is essentially no separation of the components of the composition according to the present description during transport of the composition along the umbilical pipeline. Moreover, the pressure drop in the pipeline is reduced enabling increasing the pipe pressure and therefore enabling increasing the hydrocarbon pumping capacity. The method of the present disclosure enables use of higher viscosity compositions such as a drag reducing agent compositions and the plug flow or pigging effect of the flow improver aid composition according to the present description will enhance the flow. The possibility for increasing the viscosity furthermore enables the use or lower pour point compositions.

The present disclosure is illustrated by the following non-limiting examples. It should be understood, however, that the embodiments given in the description above and in the examples are for illustrative purposes only, and that various changes and modifications are possible within the scope of the disclosure.

### Examples

### Example 1. Preparation of the flow improver aid composition and drag reducing agent for further tests

The flow improver aid composition according to the present disclosure and the drag reducing composition were prepared by mixing the components listed in Table 1 below.

Drag reducing composition (DRA) was prepared by mixing prior art drag reducing (dispersion) NECADD™ (M-I Finland Oy / M-I Swaco, A Schlumberger Company) with other constituents. Vegetable oil used was rapeseed oil (Mildola Oy).

Pour point modifier was commercially available acrylic polymer in oil composition Viscoplex^{®} 10-171 (Evonik/RohMax Oil Additives). It was surprisingly found that the amount needed was remarkably higher compared to the amount proposed by the manufacturer (0.5 to 1 wt-%).

Concentrated NaOH liquid (app. 50%, Algol Chemicals Oy) was used as a stabilizer. Additional stabilization was achieved by adding 0.5 wt-% fine grinded NECADD™.

In the tables below "Flow improver" indicates flow improver aid composition and "DRA" indicates a drag reducing agent composition used here as an example of other viscous hydrocarbon flow.

**Table 1. Recipes of the test compositions; all the amounts are given as weight percentages.**

| | Flow improver 1. | Flow improver 2. | Flow improver 5. | DRA REF. | DRA. 3 | DRA. 4 | DRA 6 |
|---|---|---|---|---|---|---|---|
| Vegetable oil | 92.6 | 96.6 | 94.3 | | 6.2 | 11.3 | 13.9 |
| Pour point modifier | 6.8 | 3.2 | 5 | | 1.6 | 2.9 | 2.3 |
| Stabilizer | 0.6 | 0.2 | 0.7 | | 0.2 | 0.2 | 0.1 |
| DRA Dispersion | | | | 100.0 | 92.0 | 85.6 | 83.7 |
| Total | 100 | 100 | 100 | | 100 | 100 | 100 |

Physical parameters of the resulting compositions are shown in Table 2 below.

**Table 2. Polymer contents, viscosities (at 4°C), densities (at 4°C) and visually evaluated fluidities at - 25°C of the test compositions.**

| | Flow improver 1. | Flow improver 2. | Flow improver 5. | DRA REF. | DRA 3 | DRA 4 | DRA 6 |
|---|---|---|---|---|---|---|---|
| Solid/Polymer content, (%) | | | | 27.9 | 24.5 | 22.7 | 24.1 |
| Viscosity 20 rpm @ 4°C (cP) | 3120 | 1045 | 300 | 2080 | 1600 | 1460 | 1310 |
| DPT % | | | | 31.8 | 29.3 | 27.3 | 28.0 |
| Density @ 4°C (kg/m³) | | 926 | 920 | 920 | | | 920 |
| Fluidity @ - 25°C (visual) | | Stiff but flowing | Flowing, slightly stiff | Frozen | | | Stiff but flowing |

Density was measured as described before.

Solids/Polymer content of dispersion is analyzed with Oxford Instruments MQC NMR Analyzer. It is based on direct measurements of the nuclear magnetic response (NMR) response from polymer in oil. The polymer signal is effectively separated from that for oil because of a significant difference in magnetic resonance relaxivity of solids and liquids. The polymer concentration (%w/w) is calculated using appropriate calibration curve.

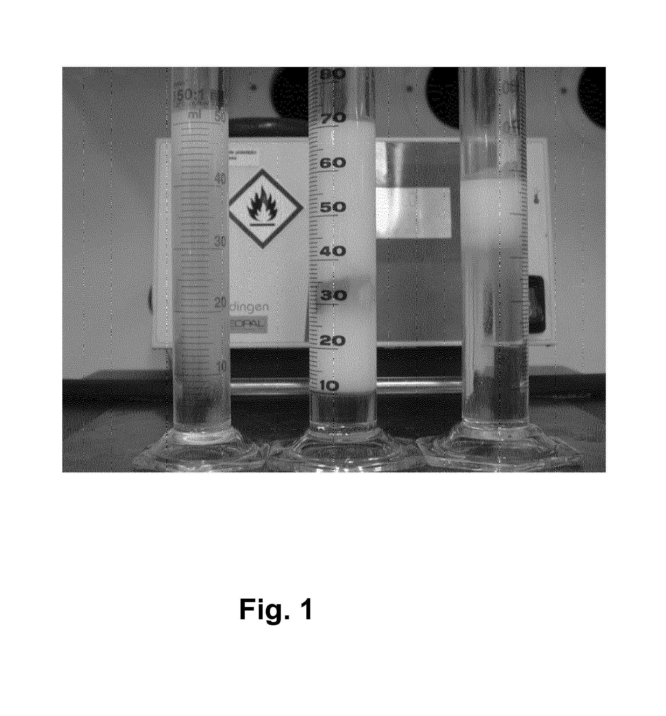

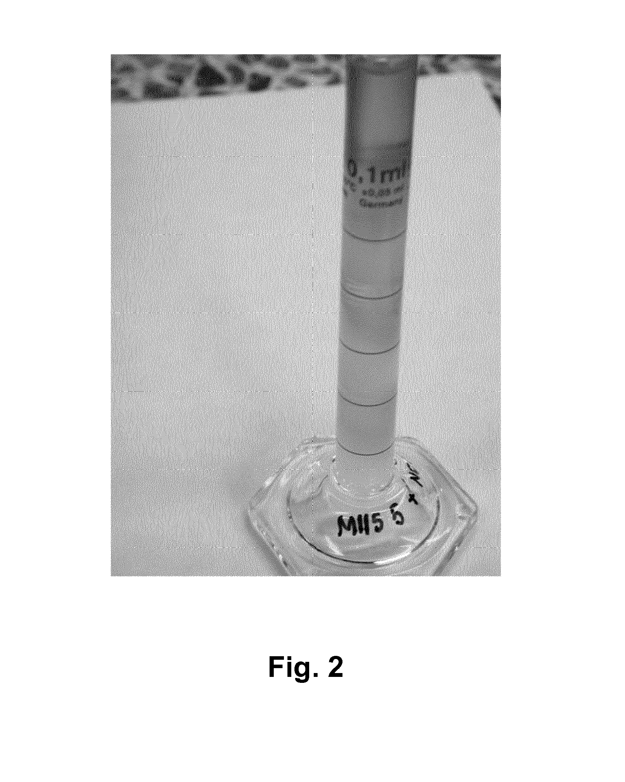

A flow improver aid composition and drag reducing composition (temperature adjusted to 4°C) were carefully added alternately to sight gauge as shown in Figures 1 and 2. If either density difference of the compositions is too high or viscosity difference too low or both separate segments of the compositions are mixed immediately or in short term. Gauges shown in Figure 2: left side shows the situation where the difference between the viscosities is too small and the segments are mixed immediately; in the middle a fairly good situation (not yet optimized) is shown; and in the right the drag reducing agent composition has too low density. Typically DRA segments tend to ascend on the surface as the density of the polymer is lower than the carrier. Figure 1 shows that a flow improver aid composition of receipt 5 and DRA of receipt 6 (Table 1) are stable in separate segments after 24 hours of storage.

### Example 2. Effect of flow improver on pressure drop in sequential feed with drag reducing composition

The flow improver aid compositions described above were tested for their flow improving ability when used sequentially with a drag reducing compositions described above.

Constant parameters of the test were following:
Diameter of the pipe was 0.016 m
Length of the pipe was 1700 m
Viscosity (Brookfield) of the DRA was 1300 cP
Length of DRA segment was 10.0 m
Density of DRA was 0.890 g/l
Dynamic viscosity of the flow improver was 300 cP
Density of the flow improver was 0.920 g/l

Injection rates varied from 30 to 60 liters per hour (l/h) and the length of flow improver segment varied from 0 (control/no improver) to 4 meters. The components were fed in at least 121 segments. Viscosity of the flow improver according to the present disclosure was 300 cP (Tables 3, 4, 5). The maximum pressure at the injection pipeline was 300 bar and starting pressure 62 bar.

The total pressure drop (Δp bar) was measured by calculating the pressure difference between the starting point and end point of the injection pipeline. The results are shown in Tables 3 to 5 below. Low total pressure drop indicates improved flow characteristics and reduced back pressure.

The situation shown in **Table 3** is an example of an ideal situation and demonstrates that it is possible to improve the flow of a fluid composition by sequentially feeding a flow improver aid composition according to the present disclosure. The total pressure drop has decreased for about 20% when compared the situation without the flow improver aid composition (segment length 0.0 m) and situation where drag reducing composition is fed sequentially with the flow improver aid composition according to the present disclosure. Low total pressure drop allows increasing the injection rate and thus increases the capacity of the injection pipeline.

The test was repeated using various injection rates and the results were in line with the results shown in Table 4 (data not shown).

**Table 3. Results of the test injection using DRA having viscosity of 1300 cP and flow improver having viscosity of 300 cP.**

| | | | |
|---|---|---|---|
| Injection rate *l*/*h* | 40.0 | 40.0 | 40.0 |
| Length of flow improver segment *m* | 0.0 | 2.0 | 4.0 |
| Amount of segments | 170 | 142 | 121 |
| Total pressure drop *Δp bar* | 152.7 | 133.1 | 119.1 |
| Pressure drop (%) | 100 | 87.2 | 78 |

The test was repeated using injection rates of 30 l/h and 50 l/h. The results (data not shown) correspond to the results shown in Table 3.

In the following tests the viscosity of DRA was increased to 2000 cP whereas other constant parameters remained unchanged. Total pressure drop of a control DRA was increased 1.5 fold when compared to previous test. The surprising effect of the flow improving composition according to the present disclosure was however again clearly demonstrated. The results are shown in **Table 4.**

**Table 4. Results of the test injection using DRA having viscosity of 2000 cP and flow improver having viscosity of 300 cP.**

| | | | |
|---|---|---|---|
| Injection rate *l*/*h* | 40.0 | 40.0 | 40.0 |
| Length of MIIS segment *m* | 0.0 | 2.0 | 4.0 |
| Amount of segments | 170 | 142 | 121 |
| Total pressure drop *Δp bar* | 234.9 | 201.6 | 177.8 |

The test was repeated using injection rates of 30 l/h and 50 l/h. The results (data not shown) correspond to the results shown in Table 4. Viscosity of DRA was still increased, until 3000 cP. This would typically increase the back-pressure resulting in either decreased injection rate or need of using more powerful injection system. In this test the total pressure drop without using the flow improver according to the present disclosure was 2.5 fold compared to the ideal situation shown in Table 3. As can be seen from the results in Table 5 below, the flow improver aid composition is still effective in decreasing the total pressure drop and back pressure in the pipeline and thus makes it possible to inject viscous hydrocarbon fluid such as drag reducing compositions via lengthy pipelines having small diameter.

**Table 5.**

| | | | |
|---|---|---|---|
| Injection rate *l*/*h* | 40.0 | 40.0 | 40.0 |
| Length of MIIS segment *m* | 0.0 | 2.0 | 4.0 |
| Amount of segments | 170 | 142 | 121 |
| Total pressure drop *Δp bar* | 352.3 | 299.5 | 261.7 |

The test was repeated using injection rates of 30 l/h and 50 l/h. The results (data not shown) correspond to the results shown in Table 5.

### Example 3. Effect of increased viscosity of the flow improver aid composition

For the last test the viscosity of the flow improver aid composition was adjusted to 1100 cP. When said composition was fed in sequences with a drag reducing composition only minor decrease or no decrease in total pressure drop was observed as a result of adding flow improver segments between the DRA segments.

## Claims

1. A composition comprising
(a) 75 to 98.9 wt-% vegetable oil; and
(b) 1 to 20 wt-% pour point modifier; and
(c) 0.1 to 5% wt-% stabilizing agent(s),
wherein the percentages are calculated on the combined weight of constituents.

2. The composition according to claim 1 having viscosity of 100 to 1000 cP, specifically 200 to 600 cP defined at a temperature of 4°C.

3. The composition according to claim 1 or 2, wherein the pour point of said composition is below -10°C, specifically below -18°C.

4. The composition according to any of claims 1 to 3, wherein the density of the composition is 0.85 to 0.99 g/l defined at a temperature of 4°C.

5. The composition according to any of the preceding claims, wherein vegetable oil is selected from rapeseed oil, soybean oil, corn oil, sunflower and linseed oil.

6. The composition according to any of the preceding claims, wherein said pour point and viscosity modifier comprises acrylate polymer.

7. The composition according to any of the preceding claims, wherein the stabilizing composition is a fatty acid salt.

8. A process for preparation of the composition as defined in any of claims 1 to 7 comprising the steps of:
(a) providing vegetable oil or a stabilized vegetable oil; and
(b) adding pour point modifier to step (a); and
(c) adding base to step (b) provided that the oil of step (a) is not stabilized; and
(d) optionally providing an unsaturated fatty acid to step (c); and
(e) mixing said constituents.

9. A process according to claim 8, wherein base and unsaturated fatty acid
are provided as a fatty acid salt.

10. A product obtainable by using the process of claim 8 or 9.

11. A method comprising feeding the composition according to any of claims 1
to 7 into a hydrocarbon fluid composition in a pipeline.

12. The method according to claim 11, wherein the composition is fed in
sequences with another composition being immiscible to composition according to claims 1 to 7 to form a plug flow.

13. The method according to claim 11 or 12, wherein the density between the
flow improver aid composition the other composition is less than 0.1 g/l defined at a temperature of 4°C.

14. The method according to any of claims 11 to 13, wherein the viscosity
between the flow improver aid composition and the other composition is more than 100 cP defined at a temperature of 4°C.

15. A method comprising feeding the composition according to any of claims 1
to 7 to a pipeline.

16. Method according to any of claims 11 to 15 wherein the pipeline is a
subsea umbilical pipeline.

17. Use of the composition according to claims 1 to 7 or 10 for improving the flow in subsea umbilical pipeline.
